(19) **Europäisches Patentamt · European Patent Office · Office européen des brevets**

(11) **EP 1 846 465 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(21) Anmeldenummer: **06707920.2**

(22) Anmeldetag: **31.01.2006**

(51) Int Cl.:
*C08G 18/08* (2006.01)  *C08G 18/22* (2006.01)
*C08G 18/66* (2006.01)  *B29C 47/40* (2006.01)
*B29C 49/00* (2006.01)

(86) Internationale Anmeldenummer:
**PCT/EP2006/050550**

(87) Internationale Veröffentlichungsnummer:
**WO 2006/082183 (10.08.2006 Gazette 2006/32)**

(54) **VERFAHREN ZUR KONTINUIERLICHEN HERSTELLUNG THERMOPLASTISCH VERARBEITBARER POLYURETHAN-ELASTOMERE**

METHOD FOR THE CONTINUOUS PRODUCTION OF THERMOPLASTICALLY-PROCESSABLE POLYURETHANE ELASTOMERS

PROCEDE POUR PRODUIRE EN CONTINU DES ELASTOMERES DE POLYURETHANNE THERMOPLASTIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2005 DE 102005004967**

(43) Veröffentlichungstag der Anmeldung:
**24.10.2007 Patentblatt 2007/43**

(73) Patentinhaber: **BASF SE**
**67056 Ludwigshafen (DE)**

(72) Erfinder:
• **SCHOLZ, Günter**
**49448 Lemförde (DE)**
• **MOURS, Marian**
**67256 Weisenheim (DE)**
• **LAWRENZ, Sven**
**68163 Mannheim (DE)**
• **PAPENFUSS, Horst**
**32351 Stemwede-Haldem (DE)**
• **BAHR, Christoph**
**49459 Lembruch (DE)**
• **KRECH, Rüdiger**
**49356 Diepholz (DE)**

(74) Vertreter: **Isenbruck, Günter et al**
**Isenbruck Bösl Hörschler Wichmann Huhn LLP**
**Patentanwälte**
**Theodor-Heuss-Anlage 12**
**68165 Mannheim (DE)**

(56) Entgegenhaltungen:
**WO-A-91/00304**          **DE-A1- 4 437 586**
**DE-C1- 19 924 090**

• **BARTH U: "KONTINUIERLICHE HERSTELLUNG MASSIVER POLYURETHANPRODUKTE ZWEIWELLIGE ZWEISCHNECKENEXTRUDER" PLASTVERARBEITER, HUETHIG GMBH, HEIDELBERG, DE, Bd. 40, Nr. 1, Januar 1989 (1989-01), Seiten 100-102,104,10, XP000080358 ISSN: 0032-1338**

EP 1 846 465 B1

**Beschreibung**

Die Erfindung betrifft ein Verfahren zur kontinuierlichen Herstellung von thermoplastisch verarbeitbaren Polyurethan-Elastomeren mit verbesserter Homogenität.

Thermoplastisch verarbeitbare Polyurethan-Elastomere (TPU's) sind seit längerem bekannt. Aufgrund ihrer ausgezeichneten physikalisch-mechanischen sowie guten chemischen Eigenschaften, die gezielt durch geeignete Wahl der Einsatzkomponenten, deren stöchiometrische Verhältnisse sowie die Herstellungsbedingungen in einem weiten Bereich eingestellt werden können, haben sie in den zurückliegenden Jahren in steigendem Maße ihren Platz in der Reihe der hochwertigen thermoplastisch verarbeitbaren Kunststoffelastomere ausgebaut.

TPU's werden nach einem Polyadditionsmechanismus aus im Wesentlichen linearen Komponenten mit endständigen isocyanatreaktiven Gruppen, insbesondere OH-Gruppen, das heißt difunktionellen Polyether- oder Polyesteralkoholen, aus difunktionellen Isocyanaten sowie kurzkettigen difunktionellen Kettenverlängerern, insbesondere Alkoholen, unter Zusatz von Hilfsstoffen und Stabilisatoren unter Berücksichtigung der maßgeschneiderten Eigenschaften für das Endprodukt hergestellt. Die bekanntesten Herstellungsverfahren sind das One shot- und das Prepolymerverfahren. Beim One shot-Verfahren werden alle Komponenten in einem Schritt miteinander zur Reaktion gebracht, während das Prepolymerverfahren in der Regel mit der Bildung eines isocyanatgruppenhaltigen Voreduktes (des Prepolymers) aus den Ausgangskomponenten Isocyanat und Makrodiol startet welches dann unmittelbar oder zu einem späteren Zeitpunkt in einem zweiten Verfahrensschritt mit dem Kettenverlängerer zum Endprodukt umgesetzt wird.

Die produktionstechnisch dominierenden kontinuierlichen Herstellungsverfahren sind das Band- oder das Reaktions-Extruderverfahren. Die danach erhaltenen TPU's werden dann in der Regel nach den beiden bekanntesten thermoplastischen Verarbeitungstechniken Spritzguss- oder Extrusionsverfahren, weiterverarbeitet, wobei die höchsten Ansprüche an die Materialqualität des TPU die Extrusionsformgebung zu Schlaucharktikeln und Folien stellt. Ursache hierfür ist zum einen das schlechtere Aufschließverhalten infolge des niedrigeren Scherkräfteeintrages im Vergleich zur Spritzgussverarbeitung, wodurch Inhomogenitäten mit einem höheren Schmelzpunkt als die Produktmatrix nicht ausreichend aufgeschlossen werden und wegen ihres von der Produktmatrix verschiedenen Brechungsindizees ein optisch auffälliges Erscheinungsbild ergeben. Zum anderen stellt der kontinuierliche Prozess der Extrusionsverarbeitung extreme Anforderungen an die Konstanz der Schmelzeviskosität der TPU's innerhalb des Verarbeitungstemperaturbereichs.

Die Materialprüfungen zur Beurteilung der Produkthomogenität von TPU's beruhen daher unter Bezug auf interne Standards sowohl auf einer visuellen optischen Erfassung von räumlich, auch farblich scharf abgegrenzten Inhomogenitäten, so genannten Stippen oder Brennern als auch von Inhomogenitäten ohne sichtbare Abgrenzung zur Matrix, die bei transparenten TPU-Extrudaten als Schlieren erkennbar sind und einem inhomogen verteilten Produkt mit stark unterschiedlicher Materialviskosität zugeordnet werden.

Die DE-C 199 24 089 schlägt zur Herstellung von homogenen TPU's mit verbessertem Erweichungsverhalten ein One shot-Dosierverfahren vor, wonach zunächst das gesamte TPU-Reaktionsgemisch, umfassend Polyisocyanat, Polyol und Kettenverlängerer in einem Statikmischer bei hohen Schergeschwindigkeiten zwischen 500 und 50.000 s$^{-1}$ unter definierten Temperaturen innerhalb sehr kurzer Mischzeiten von maximal 1 s homogen vermischt werden und die so hergestellte Reaktionsmischung, gegebenenfalls über einen zweiten Statikmischer, in einen Extruder dosiert wird.

In DE-A 199 24 090 wird bei gleichem Verfahrensziel, die Herstellung von TPU's mit verbessertem Erweichungsverhalten, die Bildung des Reaktionsgemisches in einem gerührten Rohrreaktor mit definierten Verhältnissen von Rührgeschwindigkeit und Durchsatz vorgenommen und anschließend die TPU-Bildung in einem Extruder zu Ende geführt.

Beide Verfahren dienen insbesondere zur Herstellung von homogenen TPU-Qualitäten mit erniedrigter Erweichungstemperatur.

Wesentlicher Nachteil beider Verfahren ist die fehlende Selbstreinigung der Mischvorrichtung (Statikmischer bzw. gerührter Rohrreaktor) im Gegensatz zu einem dichtkämmenden Doppelschneckenextruder. So entstehen im Prozess in Totraumzonen Produktablagerungen, die zur Verengung und schließlich zum Verschließen des freien Strömungsquerschnittes des Statikmischers oder des Rohrreaktors führen und die Stabilität sowie die Kontinuität des Herstellungsprozesses begrenzen. Darüber hinaus begünstigen die sehr kurzen Misch- und Verweilzeiten, insbesondere bei der Reaktionsvormischung mit Hilfe des Statikmischers, nachträgliche Produktendmischungen im Extruder, mit nachteiligen Folgen insbesondere auf die Materialhomogenität.

Eine Trennung von Mischprozess und schonendem Polymeraufbau durch Kombination eines selbstreinigenden Doppelschneckenextruders mit einem unmittelbar nachgeschalteten Einwellenextruder wird in der DE-A 2 302 564 zwecks Vermeidung von Überhitzung des fertigen Produktes vorgeschlagen. Zwecks Erzielung eines homogenen, knötchenfreien Endproduktes soll die kritische Reaktionsphase, in der das Reaktionsgemisch starke Klebrigkeit und eine Viskosität im Bereich zwischen ca. 200 und 700 Poise aufweist, in einer aus Knetelementen bestehenden Schneckenzone bei Knetfrequenzen bis ca. 15 Hz und einem Geschwindigkeitsgefälle im radialen Spiel zwischen Kamm und Gehäusewand von mehr als 2000 s$^{-1}$ durchlaufen werden. Beispielhaft wird als maximales Geschwindigkeitsgefälle im gescherten Produkt ein Wert von 4170 s$^{-1}$ im radialen Spiel angegeben.

Die Praxis hat jedoch gezeigt, dass unter diesen Betriebsbedingungen, das heißt einem maximalen Geschwindigkeitsgefälle von ca. 4170 s$^{-1}$ knötchenfreie homogene Produkte nicht langzeitstabil herstellbar sind.

Es war daher Aufgabe der Erfindung, ein kontinuierliches prozesskonstantes und wartungsarmes Verfahren zur Verfügung zu stellen, dass sich gegenüber Reaktivitätsschwankungen der eingesetzten Rohstoffe weitgehend unempfindlich verhält und mit dessen Hilfe homogene und knötchenfreie Produkte herstellbar sind.

Diese Aufgabe wird durch ein Verfahren zur kontinuierlichen Herstellung thermoplastisch verarbeitbarer Polyurethan- Elastomere gelöst, bei dem

- ein Polyisocyanat (A),
- eine Verbindung (B) mit im Mittel mindestens 1,8 und höchstens 3,0 zerevitinoffaktiven Wasserstoffatomen, einem mittleren Molekulargewicht von 450 g/Mol bis 5.000 g/Mol, in einem Anteil von 1 bis 80 Äquivalent-%, bezogen auf den Isocyanatgruppengehalt des Polyisocyanats(A),
- ein Kettenverlängerer (C), mit im Mittel mindestens 1,8 und höchstens 3,0 zerevitinoffaktiven Wasserstoffatomen pro Molekül, einem zahlenmittleren Molekulargewicht von 60 g/Mol bis 400 g/Mol, in einem Anteil von 12 bis 99 Äquivalent-%, bezogen auf den Isocyanatgruppengehalt des Polyisocyanats (A),
- 0 bis 30 Gew.-%, bezogen auf die Gesamtmenge des Polyurethan-Elastomeren Katalysatoren sowie weitere Hilfs- und Zusatzstoffe (D), in einem molaren NCO:OH-Verhältnis zwischen 0,9:1 bis 1,2:1 des Polyisocyanats (A) zur Summe aus der Verbindung (B), dem Kettenverlängerer (C) und den weiteren Hilfs- und Zusatzstoffen (D)

in einen selbstreinigenden Zweiwellenextruder dosiert werden, der bei hohen Schergeschwindigkeiten betrieben wird und die Mischung aus dem selbstreinigenden Zweiwellenextruder anschließend in einem weiteren Apparat zur Ausreaktion gebracht wird, das dadurch gekennzeichnet ist, dass im selbstreinigenden Zweiwellenextruder Scher geschwindigkeiten oberhalb von 6.000 s$^{-1}$ und Verweilzeiten im Bereich zwischen 1 und 20 s eingestellt werden.

Es wurde gefunden, dass durch die Trennung von Mischvorgang und molekularem Aufbau in der Herstellung der TPU's, unter Verwendung jeweils unterschiedlicher Extruder hierfür und Durchführung des Mischvorgangs bei sehr hohen Schwergeschwindigkeiten und kurzen Verweilzeiten die Produkthomogenität entscheidend verbessert werden kann.

Die Erfindung ist nicht eingeschränkt bezüglich der einsetzbaren Polyisocyanate. Dabei werden vorliegend als Polyisocyanat sowohl eine einzige Substanz als auch eine Mischung von Substanzen verstanden, die bevorzugt aus der nachfolgenden Aufzählung ausgewählt sind: 4,4'-Diphenylmethandiisocyanat mit mindestens 97 % 4,4'-Isomerenanteil, 1,6-Hexamethylendiisocyanat, Dicyclohexylmethandiisocyanat und Isophorondiisocyanat.

Als Verbindung mit im Mittel mindestens 1,8 und höchstens 3,0 zerewitinoffaktiven Wasserstoffatomen werden ebenfalls die in der Polyurethanchemie üblichen, im Wesentlichen linearen isocyanatreaktiven Substanzen oder eine Mischung hiervon verstanden. Übliche isocyanatreaktive Gruppen sind insbesondere Hydroxylgruppen, daneben Aminogruppen, Mercaptogruppen oder Carbonsäuregruppen. Bevorzugt handelt es sich hierbei um Polyesterole, Polyetherole oder Polycarbonatdiole.

Die langkettigen Verbindungen mit zerewitinoffaktiven Wasserstoffatomen haben ein mittleres Molekulargewicht im Bereich von 450 g/mol bis 5000 g/Mol und werden in einem Anteil von 1 bis 80 Äquivalent-%, bezogen auf den Isocyanatgruppengehalt des Polyisocyanats eingesetzt.

Ein dritter Ausgangsstoff für die TPU's ist der Kettenverlängerer mit im Mittel mindestens 1,8 und höchstens 3,0 zerewitinoffaktiven Wasserstoffatomen pro Molekül, einem zahlenmittleren Molekulargewicht von 60 g/Mol bis 400 g/Mol und einem Anteil von 12 bis 99 Äquivalent-%, bezogen auf den Isocyanatgruppengehalt des Polyisocyanats. Der Kettenverlängerer ist bevorzugt eine Substanz oder eine Mischung von Substanzen, ausgewählt aus der nachfolgenden Aufzählung: Ethandiol, Propandiol, Butandiol-1,4, Hexandiol-1,6 und 1,4-Di-(β-hydroxyethyl)-hydrochinon.

Zusätzlich können geeignete Katalysatoren und übliche Hilfs- und Zusatzstoffe usw. eingesetzt werden. Geeignete Katalysatoren sind unter anderem organische Metallverbindungen wie Titansäureester, Eisenverbindungen, Zinnverbindungen, zum Beispiel Zinndiacetat, Zinndioctoat, Zinndilaurat, Dibutylzinndiacetat und Dibutylzinndilaurat. Übliche Hilfs- und Zusatzstoffe sind beispielsweise Weichmacher, Gleitmittel, Molekularkettenregler, Flammschutzmittel, anorganische-/organische Füllstoffe, Farbstoffe, Pigmente und Stabilisatoren gegen Hydrolyse, Licht und thermisch bedingten Abbau.

Die Einsatzmengen des Polyisocyanats, der langkettigen Verbindung mit zerewitinoffaktiven Wasserstoffatomen und des Kettenverlängerers werden so aufeinander abgestimmt, dass das molare NCO : OH-Verhältnis aus dem Polyisocyanat zur Summe aus der langkettigen Verbindung mit zerewitinoffaktiven Wasserstoffatomen, Kettenverlängerer und ggf. den Hilfs- und Zusatzstoffen zwischen 0,9 : 1 bis 1,2 : 1 liegt.

Das Einsatzgemisch wird in einen selbstreinigenden Zweiwellenextruder dosiert, der bei hohen Schergeschwindigkeiten betrieben wird und anschließend wird die Mischung aus dem selbstreinigenden Zweiwellenextruder in einem weiteren Apparat zur Ausreaktion gebracht.

Als zweiwellige Doppelschneckenextruder können grundsätzlich alle Maschinen eingesetzt werden, die das geforderte Geschwindigkeitsgefälle von mindestens 6000 s$^{-1}$ gewährleisten können. Hierbei handelt es sich in der Regel um Maschinen, deren beide Wellen gleichsinnig rotieren. Insbesondere muss das Schneckenspiel, das heißt der Abstand zwischen Schneckenkamm und Innenwand des Extrudergehäuses eng sein, insbesondere in einem Bereich zwischen etwa 0,2 und 0,5 mm liegen. Durch das enge Schneckenspiel sind die entsprechenden Maschinen kleinvolumig, das heißt der Materialdurchsatz durch die Maschine ist begrenzt.

Bevorzugt werden selbstreinigende Zweiwellenextruder gewählt, deren Durchmesser im Bereich zwischen 32 und 62 mm liegt. Weiter bevorzugt sind selbstreinigende Zweiwellenextruder mit einem UD-Verhältnis, das heißt einem Verhältnis von Schneckenlänge zu Schneckendurchmesser, von mindestens 8.

Vorteilhaft weist der selbstreinigende Zweiwellenextruder einen Mischteilbesatz der Extruderschnecke von 5/100 bis 25/100 der gesamten Länge der Extruderschnecke auf.

Besonders geeignet sind beispielsweise Zweiwellenextruder vom Typ ZSK 43 Mv der Firma Werner & Pfleiderer, Stuttgart.

Das Geschwindigkeitsgefälle (Synonym: Schwergeschwindigkeit) in einem Extruder wird durch die folgende Gleichung definiert:

$$\text{Geschwindigkeitsgefälle (1/s)} = 2 \cdot \pi \cdot \text{Drehzahl (1/s)} \cdot \text{Kreisbahnradius der Schnecke (mm)/Radialspiel (mm)}$$

Dabei ist der Kreisbahnradius der Schnecke der halbe Schneckenaußendurchmesser. Für den Extruder ZSK 43 Mv der Firma Werner & Pfleiderer, Stuttgart, beträgt der Schneckenaußendurchmesser beispielsweise 42 mm.

Das Radialspiel oder die Spaltbreite ist der Abstand zwischen Schneckenkamm und Gehäuseinnenwand des Extruders. Für den oben genannten Extruder ZSK 43 Mv beträgt das Radialspiel 0,25 mm.

Das Reaktionsgemisch wird aus dem selbstreinigenden Zweiwellenextruder in einen weiteren Apparat zur Ausreaktion gebracht. Dieser kann bevorzugt ein Zweiwellenextruder mit niedrigen Schergeschwindigkeiten, ein kontinuierlich umlaufendes, beheizbares Förderband, oder auch ein Einwellenextruder sein.

Dabei werden vorliegend als niedrig Schergeschwindigkeiten wesentlich unterhalb der Schergeschwindigkeiten im ersten, selbstreinigenden Zweiwellenextruder verstanden, insbesondere in einem Bereich zwischen 800 s$^{-1}$ und 3200 s$^{-1}$, bevorzugt zwischen 1200 und 2400 s$^{-1}$.

Hierfür kommen insbesondere Extruder mit einem Radialspiel im Bereich von 0,5 bis 1,4 mm, bevorzugt von 0,6 bis 1,1 mm in Frage. Derartige Extruder sind großvolumig, das heißt der Materialdurchsatz ist wesentlich größer im Vergleich zu den für die erste Verfahrensstufe beschriebenen Zweiwellenextrudern.

Beispielhaft kann ein Zweiwellenextruder Typ ZSK 92 Mc der Firma Werner & Pfleiderer, Stuttgart, eingesetzt werden, mit einem äußeren Schneckendurchmesser von 91,8 mm und einem Radialspiel von 0,6 mm.

In einer Ausführungsform des Verfahrens wird das Polyisocyanat, die langkettige Verbindung mit zerewitinoffaktiven Wasserstoffatomen sowie der Kettenverlängerer und ggf. die Katalysatoren und die weiteren Hilfs- und Zusatzstoffe (D) zusammen in einen ersten Einzugsteil des bei hohen Schergeschwindigkeiten betriebenen Zweiwellenextruders dosiert.

Alternativ ist es auch möglich, die langkettige Verbindung mit zerewitinoffaktiven Waserstoffatomen und den Kettenverlängerer vor der Dosierung in den Einzugsteil des selbstreinigenden Zweiwellenextruders vorzumischen, insbesondere mittels eines nach dem dynamischen Mischprinzip arbeitenden Mischkopfes oder eines Statikmischers.

Alternativ ist es auch möglich, das Polyisocyanat und die langkettige Verbindung mit zerewitinoffaktiven Wasserstoffatomen in einen ersten Einzugsteil des mit hoher Schergeschwindigkeit betriebenen Zweiwellenextruders und den Kettenverlängerer in einen weiteren, stromabwärts gelegenen Einzugsteil desselben zu dosieren.

Die nach dem erfindungsgemäßen Verfahren erhaltenen TPU's können insbesondere zur Herstellung von Spritzgussteilen oder Extrusionsartikeln verwendet werden.

Durch das erfindungsgemäße Verfahren werden TPU's mit ausgezeichneter Homogenität, das heißt schlieren- und knötchenfreie TPU's zur Verfügung gestellt.

Das Verfahren ist prozesskonstant und wartungsarm, insbesondere bilden sich in dem mit hohen Schergeschwindigkeiten betriebenen Zweiwellenextruder keine Ablagerungen. Darüber hinaus wird durch die intensive Vormischung bei hohen Schergefällen der Reaktionsablauf beschleunigt und damit eine Erhöhung der Durchsatzleistung erreicht. Das Verfahren verhält sich weitgehend unempfindlich gegenüber Reaktivitätsschwankungen der eingesetzten Rohstoffe.

Die Erfindung wird im Folgenden anhand von Ausführungsbeispielen näher erläutert.

Beispiele 1 bis 4

Die Beispiele 1 bis 4 wurden mit der nachfolgenden Rezeptur ausgeführt, wobei die Komponenten jeweils in Gewichtsteilen angegeben sind:

| | |
|---|---|
| 4,4'-Diphenylmethandiisocyanat (Polyisocyanat A) | 26,00 |
| Polybutandiol-1,4-adipat, Molekulargewicht ca. 2450 g/Mol (Verbindung B) | 66,66 |
| Butandiol-1,4 (Kettenverlängerer C) | 6,80 |
| Elastostab® HO1 der Fa. Elastogran (Hydrolysestabilisator D) | 0,53 |
| Zinndioktoat (Katalysator) | 10 ppm |

Dem fertigen TPU-Granulat wurden 0,05 Gew.-% Ethylen-bis-stearylamid bezogen auf das Gesamtgewicht des TPU-Granulates in Pulverform als Antibackhilfe zugemischt.

Beispiel 1 (nicht erfindungsgemäß)

In das erste Gehäuse eines Zweiwellenextruders Typ ZSK 92 der Firma Werner & Pfleiderer, Stuttgart mit einer Verfahrenslänge von 48 D und einem radialen Schneckenspiel von 0,6 mm, wurden eine Mischung aus der Verbindung B, dem Kettenverlängerer C, dem Hydrolysestabilisator D und dem Katalysator mit einer Vorlagetemperatur von 150°C einerseits sowie getrennt hiervon das Polyisocyanat A mit einer Vorlagetemperatur von 65° in das erste Gehäuse desselben zudosiert. Die Drehzahl der Doppelschnecke betrug 280 min$^{-1}$. Die Temperatureinstellwerte der Gehäuse lagen in Stromabrichtung im ersten Schneckendrittel bei 200°C, im zweiten Schneckendrittel bei 170°C und im dritten und letzten Schneckendrittel bei 190°C. Der Ausstoß betrug 850 kg/h.

Nach dem Schmelzeabschlag durch Unterwassergranulierung und integrierter zentrifugaler Trocknung wurde das Granulat bei ca. 80 bis 90°C endgetrocknet und anschließend durch Spritzgießen zu Prüfkörpern weiterverarbeitet. Zusätzlich wurden aus dem Granulat Rundschläuche zur Einschätzung der Homogenität extrudiert.

Beispiel 2 (erfindungsgemäß)

Abweichend von Beispiel 1 wurde das Verfahren nach derselben Rezeptur in einer Apparatur umfassend einen ersten kleinvolumigen, hochtourig drehenden Zweiwellenextruder Typ ZSK 43 Mv, der Firma Werner & Pfleiderer, Stuttgart durchgeführt, der mit der linken Seite des ersten Gehäuses in Stromabrichtung des in Beispiel 1 beschriebenen Zweiwellenextruders Typ ZSK 92 der Firma Werner & Pfleiderer verbunden war.

Die Drehzahl des Zweiwellenextruders ZSK 43, dessen Doppelschnecke einen Mischelementeanteil von ca. 7 % der Verfahrenslänge aufwies, betrug 1000 min$^{-1}$. Die Temperatureinstellwerte der Gehäuse 1 bis 12 des Zweiwellenextruders ZSK 43 lagen durchgängig bei 210°C. Die Einstellwerte für die Schneckendrehzahl und die Gehäusetemperaturen des Zweiwellenextruders ZSK92 entsprachen denen in Beispiel 1 angegebenen Werten. Durchsatz, Granulierung und Granulatbehandlung entsprachen gleichfalls Beispiel 1.

Beispiel 3 (erfindungsgemäß)

Es wurde entsprechend Beispiel 2 gefahren, abweichend hiervon jedoch mit einer erhöhten Schneckendrehzahl des Zweiwellenextruders ZSK 43 Mv von 1500 min$^{-1}$ und einem erhöhten Durchsatz von 1000 kg/h.

Beispiel 4 (erfindungsgemäß)

Es wurde analog Beispiel 2 gefahren, jedoch abweichend hiervon mit einer Schneckendrehzahl des Zweiwellenextruders Typ ZSK43 Mv von 700 min$^{-1}$.

Beispiel 5 und 6

Die Beispiele 5 und 6 wurden mit folgender Rezeptur durchgeführt, wobei die Komponenten der Rohstoffmischung jeweils in Gewichtsteilen angegeben sind:

| | |
|---|---|
| 4,4'-Diphenylmethandiisocyanat (Polyisocyanat A) | 36,17 |
| Polytetramethylenglykol, Molekulargewicht ca. 1000 g/Mol (Verbindung B) | 55,81 |

(fortgesetzt)

| | |
|---|---|
| Butandiol-1,4 (Kettenverlängerer C) | 8,02 |
| Tetrabutylorthotitanat (Katalysator) | 7,5 ppm |

### Beispiel 5 (nicht erfindungsgemäß)

Die Apparatur entsprach den Beispielen 2 bis 4, das heißt es wurde ein kleinvolumiger Zweiwellenextruder Typ ZSK43 Mv eingesetzt, der mit einem großvolumigen Zweiwellenextruder ZSK 92 verbunden war. Eine Mischung aus der Verbindung B, dem Kettenverlängerer und dem Katalysator und getrennt hiervon das Polyisocyanat A wurden mit 140°C in das erste Gehäuse des Zweiwellenextruders ZSK 43 Mv dosiert. Die Drehzahl der Doppelschnecke des Zweiwellenextruders ZSK 43 Mv betrug 600 min$^{-1}$. Die Temperatureinstellwerte der Gehäuse 1 bis 12 des Zweiwellenextruders lagen durchgängig bei 20°C. Der Einstellwert für die Schneckendrehzahl des großvolumigen Zweiwellenextruders ZSK 92 betrug 250 min$^{-1}$, die Temperatureinstellungen für die Gehäuse lagen im ersten Schneckendrittel bei 190°C, im zweiten Schneckendrittel bei 160°C und im letzten Schneckendrittel bei 180°C. Der Durchsatz betrug 700 kg/h. Granulierung und Granulatbehandlung erfolgten wie in Beispiel 1.

### Beispiel 6 (erfindungsgemäß)

Das Verfahren wurde analog Beispiel 5 durchgeführt, jedoch mit dem Unterschied, dass die Schneckendrehzahl des kleinvolumigen Zweiwellenextruders auf 900 min$^{-1}$ erhöht war.

### Beispiel 7 (erfindungsgemäß)

Es wurde mit folgender Rezeptur gearbeitet, wobei die Komponenten der Rohstoffmischung jeweils in Gewichtsteilen angegeben sind:

| | |
|---|---|
| Poly(butandiol-1,4/hexandiol-1,6)-adipat, Molekulargewicht ca. 2200 g/mol (Verbindung B) | 70,75 |
| Hexamethylendiisocyanat (Polyisocyanat A) | 18,80 |
| Hexandiol-1,6 (Kettenverlängerer C) | 9,36 |
| n-Oktanol (Kettenregler D 1) | 0,46 |
| Elastostab® HO1 der Firma Elastogran (Hydrolysestabilisator D 2) | 0,58 |
| Zinndioktoat (Katalysator) | 0,05 |

Eine auf 160°C erhitzte Mischung aus der Verbindung B, dem n-Oktanol, dem Katalysator und dem Hydrolysestabilisator sowie hiervon getrennt das Polyisocyanat A wurden in das erste Gehäuse des kleinvolumigen Zweiwellenextruders ZSK 43 Mv gefördert, der, wie in Beispiel 2 beschrieben, mit dem großvolumigen Zweiwellenextruder ZSK 92 verbunden war. Der Kettenverlängerer Hexandiol-1,6 wurde dagegen in das stromabwärts gelegene Gehäuse 8 des ZSK 43 Mv zudosiert. Die Schneckendrehzahl wurden auf 750 min$^{-1}$ für den ZSK 43 bzw. auf 160 min$^{-1}$ für den ZSK 92 eingestellt. Granulierung und Granulatweiterbehandlung erfolgten analog Beispiel 1.

Bewertung von Homogenität und Stippen(Knötchen)-anteil der nach den Beispielen 1 bis 7 erhaltenen TPU's.

Zur Bewertung wurden in einem Extrusiographen Typ PLE 331 der Fa. Brabender, mit kernprogressiver Schnek-ke (1 : 2) und genutetem Einzug bei einer Schneckendrehzahl von 30 min$^{-1}$ aus den entsprechenden TPU-Granulaten über einen Schlauchdüsenkopf mit einem Außendurchmesser von 9,5 mm und einem Innendurchmesser von 6,3 mm Schlauchprofile extrudiert.

Die Temperatureinstellwerte des Extrusiographen waren:

Zone 1 180°C, Zone 2 190°C, Zone 3 200°C, Messring 190°C und Profilkopf 200°C.

Die Einschätzung von Homogenität und Stippenanteil erfolgte visuell. Hierfür wurden die Rundschläuche mit Referenzmustern verglichen. Hierbei wurde als stippenfreie Schlauchqualität, mit Freigabe zur Extrusionsverarbeitung, eine Schlauchqualität definiert, die höchstens zwei Stippen(Knötchen) mit einem maximalen Durchmesser von 0,5 mm auf einer Schlauchlänge von 1 m aufweist.

In der nachfolgenden Tabelle sind die Versuchsergebnisse aus den Beispielen 1 bis 7 zusammengefasst:

| Beispiel | Mischaggregat (einziger bzw. erster Extruder) | Scheckendrehzahl des Mischaggregates (1/min) | Schergefälle im Mischaggregat Berechnet (1/s) | Verweilzeit im Mischaggregat(s) | Homogenität | Extrusionsfreigabe |
|---|---|---|---|---|---|---|
| Vergleich | ZSK 92 | 280 | 2247 | 26 | stark schlierig und stippig | gesperrt |
| 2 | ZSK 43 Mv | 1000 | 8792 | 5,7 | schlieren- und stippenfrei | frei |
| 3 | ZSK 43 Mv | 1500 | 13188 | 3,8 | schlieren- und stippenfrei | frei |
| 4 | ZSK 43 Mv | 700 | 6154 | 8,1 | leicht schlierig, stippenfrei | noch frei |
| Vergleich | ZSK 43 Mv | 600 | 5275 | 9,4 | leicht schlierig und stippig | gesperrt |
| 6 | ZSK 43 Mv | 900 | 7912 | 6,3 | schlieren- und stippenfrei | frei |
| 7 | ZSK 43 Mv | 750 | 6593 | 7,5 | leicht schlierig, stippenfrei | frei |

Die Versuchsergebnisse zeigen, dass in einer Anlage mit zwei hintereinander geschalteten Extrudern, wobei der erste Extruder, das Mischaggregat, ein hohes Schergefälle von mindestens 6000 s$^{-1}$ aufwies, eine Schlauchqualität mit Freigabe zur Extrusionsverarbeitung erreicht wurde.

**Patentansprüche**

1.  Verfahren zur kontinuierlichen Herstellung thermoplastisch verarbeitbarer Polyurethan-Elastomeren, bei dem

     - ein Polyisocyanat (A),
     - eine Verbindung (B) mit im Mittel mindestens 1,8 und höchstens 3,0 zerevitinoffaktiven Wasserstoffatomen, einem mittleren Molekulargewicht von 450 g/Mol bis 5.000 g/Mol, in einem Anteil von 1 bis 80 Äquivalent-%, bezogen auf den Isocyanatgruppengehalt des Polyisocyanats(A),
     - ein Kettenverlängerer (C), mit im Mittel mindestens 1,8 und höchstens 3,0 zerevitinoffaktiven Wasserstoffatomen pro Molekül, einem zahlenmittleren Molekulargewicht von 60 g/Mol bis 400 g/Mol, in einem Anteil von 12 bis 99 Äquivalent-%, bezogen auf den Isocyanatgruppengehalt des Polyisocyanats (A),
     - 0 bis 30 Gew.-%, bezogen auf die Gesamtmenge des Polyurethan-Elastomeren Katalysatoren sowie weitere Hilfs-und Zusatzstoffe (D), in einem molaren NCO:OH-Verhältnis zwischen 0,9:1 bis 1,2:1 des Polyisocyanats (A) zur Summe aus der Verbindung (B), dem Kettenverlängerer (C) und den weiteren Hilfs- und Zusatzstoffen (D)

    in einen selbstreinigenden Zweiwellenextruder dosiert werden, der bei hohen Schergeschwindigkeiten betrieben wird und die Mischung aus dem selbstreinigenden Zweiwellenextruder anschließend in einem weiteren Apparat zur Ausreaktion gebracht wird, **dadurch gekennzeichnet, dass** im selbstreinigenden Zweiwellenextruder Schergeschwindigkeiten oberhalb von 6.000 s$^{-1}$ und Verweilzeiten im Bereich zwischen 1 und 20 s eingestellt werden.

2.  Verfahren nach Anspruch 1, **dadurch gekennzeichnet, dass** der weitere Apparat ein Zweiwellenextruder mit niedrigen Schergeschwindigkeiten ist.

3.  Verfahren nach Anspruch 1, **dadurch gekennzeichnet, dass** der weitere Apparat ein kontinuierlich umlaufendes, beheizbares Förderband ist.

4.  Verfahren nach einem der Ansprüche 1 bis 3, **dadurch gekennzeichnet, dass** das Polyisocyanat (A) eine Substanz oder eine Mischung von Substanzen, ausgewählt aus der nachfolgenden Aufzählung ist: 4,4'-Diphenylmethandiisocyanat mit mindestens 97 % 4,4'-Isomerenanteil, 1,6-Hexamethylendiisocyanat, Dicyclohexylmethandiisocyanat und Isophorondiisocyanat.

5.  Verfahren nach einem der Ansprüche 1 bis 4, **dadurch gekennzeichnet, dass** die die zerevitinoffaktive Wasserstoffatome enthaltende Verbindung (B) eine Substanz oder eine Mischung von Substanzen, ausgewählt aus der nachfolgenden Aufzählung ist: Polyesterole, Polyetherole und Polycarbonatdiole.

6.  Verfahren nach einem der Ansprüche 1 bis 5, **dadurch gekennzeichnet, dass** der Kettenverlängerer (C) eine Substanz oder eine Mischung von Substanzen, ausgewählt aus der nachfolgenden Aufzählung ist: Ethandiol, Propandiol, Butandiol-1,4, Hexandiol-1,6 und 1,4-Di-(β-hydroxyethyl)-hydrochinon.

7.  Verfahren nach einem der Ansprüche 1 bis 6, **dadurch gekennzeichnet, dass** das Polyisocyanat (A), die Verbindung (B), der Kettenverlängerer (C) und gegebenenfalls die Katalysatoren und die weiteren Hilfs- und Zusatzstoffe (D) zusammen in einen ersten Einzugsteil des mit Schergeschwindigkeiten oberhalb von 6000 s$^{-1}$ betriebenen selbstreinigenden Zweiwellenextruders dosiert werden.

8.  Verfahren nach einem der Ansprüche 1 bis 7, **dadurch gekennzeichnet, dass** die Verbindung (B) und der Kettenverlängerer (C) vor der Dosierung in den Einzugsteil des mit Schergeschwindigkeiten oberhalb von 6000 s$^{-1}$ betriebenen selbstreinigenden Zweiwellenextruders vorgemischt werden, insbesondere mittels eines nach dem dynamischen Mischprinzip arbeitenden Mischkopfes oder eines Statikmischers.

9.  Verfahren nach einem der Ansprüche 1 bis 6, **dadurch gekennzeichnet, dass** das Polyisocyanat (A) und die Verbindung (B) in einen ersten Einzugsteil des mit Schergeschwindigkeiten oberhalb von 6000 s$^{-1}$ betriebenen selbstreinigenden Zweiwellenextruders und der Kettenverlängerer (C) in einen weiteren, stromabwärts gelegenen Einzugsteil des selbstreinigenden Zweiwellenextruders dosiert wird.

10. Verfahren nach einem der Ansprüche 1 bis 9, **gekennzeichnet durch** einen Durchmesser des mit Schergeschwindigkeiten oberhalb von 6000 s$^{-1}$ betriebenen selbstreinigenden Zweiwellenextruders im Bereich zwischen 32 und 62 mm.

11. Verfahren nach einem der Ansprüche 1 bis 10, **gekennzeichnet durch** ein L/D-Verhältnis des mit Schergeschwindigkeiten oberhalb von 6000 s$^{-1}$ betriebenen selbstreinigenden Zweiwellenextruders von mindestens 8.

12. Verfahren nach einem der Ansprüche 1 bis 11, **dadurch gekennzeichnet, dass** der mit Schergeschwindigkeiten oberhalb von 6000 s$^{-1}$ betriebene selbstreinigende Zweiwellenextruder einen Mischteilbesatz der Extruderschnecke von 5/100 bis 25/100 der gesamten Länge der Extruderschnecke aufweist.

13. Verwendung der nach dem Verfahren nach einem der Ansprüche 1 bis 12 erhaltenen thermoplastischen Polyurethanelastomere zur Herstellung von Spritzgußteilen oder Extrusionsartikeln.

**Claims**

1. A process for continuous production of thermoplastically processable polyurethane elastomers, by metering

   - a polyisocyanate (A),
   - a proportion of from 1 to 80 equivalent %, based on the isocyanate group content of the polyisocyanate (A), of a compound (B) having an average of at least 1.8 and at most 3.0 hydrogen atoms having Zerewitinoff activity, with an average molar mass of from 450 g/mol to 5000 g/mol,
   - a proportion of from 12 to 99 equivalent %, based on the isocyanate group content of the polyisocyanate (A), of a chain extender (C) having an average of at least 1.8 and at most 3.0 hydrogen atoms having Zerewitinoff activity per molecule, with an average molar mass of from 60 g/mol to 400 g/mol,
   - from 0 to 30% by weight, based on the total amount of the polyurethane elastomer, of catalysts and further auxiliaries and additives (D), the molar NCO:OH ratio of polyisocyanate (A) to the entirety composed of the compound (B), of the chain extender (C), and of the further auxiliaries and additives (D) being from 0.9:1 to 1.2:1

   into a self-cleaning twin-screw extruder which is operated at high shear rates, and then bringing the mixture from the self-cleaning twin-screw extruder into a further apparatus in order to complete the reaction, which comprises setting shear rates above 6000 s$^{-1}$ and residence times in the range from 1 to 20 s in the self-cleaning twin-screw extruder.

2. The process according to claim 1, wherein the further apparatus is a twin-screw extruder with low shear rates.

3. The process according to claim 1, wherein the further apparatus is a continuously revolving, heatable conveyer belt.

4. The process according to any of claims 1 to 3, wherein the polyisocyanate (A) is a substance or a mixture of substances selected from the following list: diphenylmethane 4,4'-diisocyanate with at least 97% 4,4'-isomer content, hexamethylene 1,6-diisocyanate, dicyclohexylmethane diisocyanate, and isophorone diisocyanate.

5. The process according to any of claims 1 to 4, wherein the compound (B) comprising the hydrogen atoms having Zerewitinoff activity is a substance or a mixture of substances selected from the following list: polyesterols, polyetherols, and polycarbonatediols.

6. The process according to any of claims 1 to 5, wherein the chain extender (C) is a substance or a mixture of substances selected from the following list: ethanediol, propanediol, 1,4-butanediol, 1,6-hexanediol, and 1,4-di(β-hydroxyethyl)hydroquinone.

7. The process according to any of claims 1 to 6, wherein the polyisocyanate (A), the compound (B), the chain extender (C), and, if appropriate, the catalysts and the further auxiliaries and additives (D) are metered together into a first feed section of the self-cleaning twin-screw extruder operated with shear rates above 6000 s$^{-1}$.

8. The process according to any of claims 1 to 7, wherein the compound (B) and the chain extender (C) are premixed prior to metering into the feed section of the self-cleaning twin-screw extruder operated with shear rates above 6000 s$^{-1}$, and in particular by means of a static mixer or of a mixing head operating by the dynamic mixing principle.

9. The process according to any of claims 1 to 6, wherein the polyisocyanate (A) and the compound (B) are metered into a first feed section of the self-cleaning twin-screw extruder operated with shear rates above 6000 s$^{-1}$, and the chain extender (C) is metered into a further feed section situated downstream in the self-cleaning twin-screw extruder.

10. The process according to any of claims 1 to 9, wherein the diameter of the self-cleaning twin-screw extruder operated with shear rates above 6000 s$^{-1}$ is in the range from 32 to 62 mm.

11. The process according to any of claims 1 to 10, wherein the L/D ratio of the self-cleaning twin-screw extruder operated with shear rates above 6000 s$^{-1}$ is at least 8.

12. The process according to any of claims 1 to 11, wherein mixing sections occupy from 5/100 to 25/100 of the entire length of the extruder screw in the self-cleaning twin-screw extruder operated with shear rates above 6000 s$^{-1}$.

13. The use, for production of injection-molded parts or of extrusion items, of the thermoplastic polyurethane elastomers obtained by the process according to any of claims 1 to 12.

**Revendications**

1. Procédé de fabrication continue d'élastomères de polyuréthane thermoplastiquement façonnables, selon lequel

   - un polyisocyanate (A),
   - un composé (B) ayant en moyenne au moins 1,8 et au plus 3,0 atomes d'hydrogène actifs selon Zerevitinoff, un poids moléculaire moyen de 450 g/mol à 5 000 g/mol, en une proportion de 1 à 80 % équivalent, par rapport à la teneur en groupes isocyanates du polyisocyanate (A),
   - un allongeur de chaîne (C), ayant en moyenne au moins 1,8 et au plus 3,0 atomes d'hydrogène actifs selon Zerevitinoff par molécule, un poids moléculaire moyen en nombre de 60 g/mol à 400 g/mol, en une proportion de 12 à 99 % équivalent, par rapport à la teneur en groupes isocyanates du polyisocyanate (A),
   - 0 à 30 % en poids, par rapport à la quantité totale des élastomères de polyuréthane, de catalyseurs, ainsi que d'adjuvants et additifs supplémentaires (D), en un rapport molaire NOC:OH compris entre 0,9:1 et 1,2:1 du polyisocyanate (A) sur la somme du composé (B), de l'allongeur de chaîne (C) et des adjuvants et additifs supplémentaires (D)

   sont introduits par dosage dans une extrudeuse à double vis autonettoyante, qui est actionnée à des vitesses de cisaillement élevées et le mélange issu de l'extrudeuse à double vis autonettoyante est ensuite placé dans un autre appareil pour réagir, **caractérisé en ce que** des vitesses de cisaillement supérieures à 6 000 s$^{-1}$ et des temps de séjour dans la plage allant de 1 à 20 s sont réglés dans l'extrudeuse à double vis autonettoyante.

2. Procédé selon la revendication 1, **caractérisé en ce que** l'autre appareil est une extrudeuse à double vis ayant des vitesses de cisaillement plus faibles.

3. Procédé selon la revendication 1, **caractérisé en ce que** l'autre appareil est une bande transporteuse chauffable qui circule en continu.

4. Procédé selon l'une quelconque des revendications 1 à 3, **caractérisé en ce que** le polyisocyanate (A) est une substance ou un mélange de substances choisies dans l'énumération suivante : diisocyanate de 4,4'-diphénylméthane avec une proportion d'au moins 97 % d'isomères 4,4', diisocyanate de 1,6-hexaméthylène, diisocyanate de dicyclohexylméthane et diisocyanate d'isophorone.

5. Procédé selon l'une quelconque des revendications 1 à 4, **caractérisé en ce que** le composé (B) qui contient les atomes d'hydrogène actifs selon Zerevitinoff est une substance ou un mélange de substances choisies dans l'énumération suivante : polyestérols, polyéthérols et polycarbonate diols.

6. Procédé selon l'une quelconque des revendications 1 à 5, **caractérisé en ce que** l'allongeur de chaîne (C) est une substance ou un mélange de substances choisies dans l'énumération suivante : éthane diol, propane diol, butane diol-1,4, hexane diol-1,6 et 1,4-di-(β-hydroxyéthyl)-hydroquinone.

7. Procédé selon l'une quelconque des revendications 1 à 6, **caractérisé en ce que** le polyisocyanate (A), le composé (B), l'allongeur de chaîne (C) et éventuellement les catalyseurs et les adjuvants et additifs supplémentaires (D) sont introduits par dosage ensemble dans une première partie d'entrée de l'extrudeuse à double vis autonettoyante actionnée à des vitesses de cisaillement supérieures à 6 000 s$^{-1}$.

8.  Procédé selon l'une quelconque des revendications 1 à 7, **caractérisé en ce que** le composé (B) et l'allongeur de chaîne (C) sont prémélangés avant l'introduction par dosage dans la partie d'entrée de l'extrudeuse à double vis autonettoyante actionnée à des vitesses de cisaillement supérieures à 6 000 s$^{-1}$, notamment au moyen d'un mélangeur statique ou d'une tête de mélange fonctionnant selon le principe de mélange dynamique.

9.  Procédé selon l'une quelconque des revendications 1 à 6, **caractérisé en ce que** le polyisocyanate (A) et le composé (B) sont introduits par dosage dans une première partie d'entrée de l'extrudeuse à double vis autonettoyante actionnée à des vitesses de cisaillement supérieures à 6 000 s$^{-1}$ et l'allongeur de chaîne (C) est introduit par dosage dans une autre partie d'entrée, située en aval, de l'extrudeuse à double vis autonettoyante.

10.  Procédé selon l'une quelconque des revendications 1 à 9, **caractérisé par** un diamètre de l'extrudeuse à double vis autonettoyante actionnée à des vitesses de cisaillement supérieures à 6 000 s$^{-1}$ dans la plage allant de 32 à 62 mm.

11.  Procédé selon l'une quelconque des revendications 1 à 10, **caractérisé par** un rapport L/D de l'extrudeuse à double vis autonettoyante actionnée à des vitesses de cisaillement supérieures à 6 000 s$^{-1}$ d'au moins 8.

12.  Procédé selon l'une quelconque des revendications 1 à 11, **caractérisé en ce que** l'extrudeuse à double vis autonettoyante actionnée à des vitesses de cisaillement supérieures à 6 000 s$^{-1}$ présente une garniture de section de mélange de la vis de l'extrudeuse de 5/100 à 25/100 de la longueur totale de la vis de l'extrudeuse.

13.  Utilisation des élastomères de polyuréthane thermoplastiques obtenus par le procédé selon l'une quelconque des revendications 1 à 12 pour la fabrication de parties moulées ou d'articles extrudés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19924089 C
- DE 19924090 A
- DE 2302564 A